# EUROPEAN PATENT SPECIFICATION

(11) **EP 3 882 217 B1**
(45) Date of publication and mention of the grant of the patent: **11.05.2022**
(21) Application number: 21156542.9
(22) Date of filing: 11.02.2021
(51) Int. Cl.: C01G 53/00, H01M 4/505

(54) **POSITIVE ELECTRODE ACTIVE MATERIAL AND SECONDARY BATTERY INCLUDING POSITIVE ELECTRODE ACTIVE MATERIAL**
POSITIVELEKTRODENAKTIVMATERIAL UND SEKUNDÄRBATTERIE MIT POSITIVELEKTRODENAKTIVMATERIAL
MATÉRIAU ACTIF D'ÉLECTRODE POSITIVE ET BATTERIE SECONDAIRE COMPRENANT UN MATÉRIAU ACTIF D'ÉLECTRODE POSITIVE

(30) Priority: 18.03.2020 JP 2020047775
(43) Date of publication of application: 22.09.2021
(73) Proprietor: TOYOTA JIDOSHA KABUSHIKI KAISHA, Toyota-shi, Aichi-ken, 471-8571 (JP)
(72) Inventor: YAMAMOTO, Yuji, Toyota-shi, Aichi-ken, 471-8571 (JP)
(74) Representative: Kuhnen & Wacker Patent- und Rechtsanwaltsbüro PartG mbB

(56) References cited:
- EP-A1- 2 963 706
- EP-A1- 2 999 036
- US-A1- 2012 256 337
- US-A1- 2014 205 901
- US-A1- 2018 138 507

## Description

### BACKGROUND OF THE INVENTION

### 1. Field of the Invention

The present invention relates to a positive electrode active material and a secondary battery including the positive electrode active material.

### 2. Description of Related Art

Secondary batteries such as lithium ion secondary batteries and sodium ion secondary batteries have been suitably used not only for so-called portable power sources for personal computers, mobile terminals, etc. but also for power sources for driving vehicles in recent years. Secondary batteries such as lithium ion secondary batteries for such applications are required to have high durability that realizes maintenance of a desired output for a long period of time while the batteries are mounted on vehicles (for example, have excellent cycle characteristics).

Research and development have been carried out from various angles in order to improve the durability of the secondary battery for a vehicle drive power source. One approach for this is to study the configuration (composition) and structure of the positive electrode active material used in the secondary battery. For example, Japanese Unexamined Patent Application Publication No. 2019-145204 (JP 2019-145204 A) discloses a positive electrode active material that includes a lithium-containing transition metal oxide containing at least nickel, cobalt, and manganese. The positive electrode active material is characterized by having voids occupying 20% or more of the particle cross-sectional area that is obtained from the particle cross-sectional image and is characterized in that the voids include a long void having a length exceeding a length corresponding to 1/6 of the particle size and communicating with the inside of the particle. JP 2019-145204 A states that the positive electrode active material particles having such a configuration enable the permeability of the non-aqueous electrolyte to be improved while suppressing decrease in mechanical strength of the particles. Patent documents EP 2 963 706 A1, US 2012/256337 A1, US 2018/138507 A1, US 2014/205901 A1, and EP 2 999 036 A1 disclose further positive electrode active materials.

### SUMMARY OF THE INVENTION

The positive electrode active material described in JP 2019-145204 A has achieved some results in improving the output characteristics of the non-aqueous electrolyte secondary battery including the positive electrode active material, but there is still room for improvement from the viewpoint of further improving the durability performance (cycle characteristics, etc.) of the secondary battery used as a power source for driving a vehicle. The present invention aims to improve the performance of a secondary battery in an approach of improving the structure and configuration of the positive electrode active material. The present invention provides a positive electrode active material for a secondary battery that realizes good output characteristics (reduction of battery internal resistance), and a secondary battery including the positive electrode active material.

The above-mentioned object is solved by the subject-matter of the independent claims. Advantageous embodiments of the present invention are the subject-matter of the dependent claims. The present inventor focused on properties of the lithium transition metal composite oxide used as a positive electrode active material for a lithium ion secondary battery, containing at least manganese (Mn) as a transition metal element, and having a layered rock salt structure. Then, the present inventor found that in the composite oxide having the layered rock salt structure, a spinel structured lithium transition metal composite oxide containing Mn is locally formed, which makes the spinel structure portion higher in resistance than the other portions. Furthermore, the present inventor found that in the process of producing positive electrode active material particles made of lithium-containing composite oxide having a layered rock salt structure and containing Mn, local formation of such spinel structured composite oxide can be suppressed by restraining local accumulation of Mn concentration, and has completed the present invention.

That is, a positive electrode active material provided by the present invention is a positive electrode active material having a granular shape and used for a positive electrode of a secondary battery. The positive electrode active material includes a lithium transition metal composite oxide containing manganese (Mn) as a transition metal element and having a layered rock salt structure. In the positive electrode active material disclosed here, a concentration difference between an average Mn concentration and a local maximum Mn concentration is equal to or less than 4atm%. The average Mn concentration is measured based on inductively coupled plasma (ICP) emission spectroscopic analysis of the positive electrode active material. The local maximum Mn concentration is measured in a cross section of an aggregate of the positive electrode active material based on energy dispersive X-ray analysis with a transmission electron microscope (TEM-EDX).

As used herein, the term "secondary battery" refers to a power storage device that can be charged and discharged repeatedly, and is a term that includes a so-called storage battery such as a lithium ion secondary battery. The "positive electrode active material" and the "negative electrode active material" refer to substances that are used for the positive electrode and the negative electrode, respectively, of a predetermined secondary battery and that can reversibly store and release chemical species serving as charge carriers. Unless otherwise specified, the term "positive electrode active material" in the present disclosure indicates an aggregate of particles (positive electrode active material particles) containing the above lithium transition metal composite oxide as an essential component. Whether a single positive electrode active material particle is described or an aggregate of positive electrode active material particles (which includes powder and a constituent of positive electrode active material layer of the secondary battery) is described is obvious to those skilled in the art, based on the description herein. The "local maximum Mn concentration" refers to the maximum local Mn concentration among a predetermined number of local Mn concentrations measured in a cross section (cross section TEM-EDX) of an aggregate of the positive electrode active material based on the TEM-EDX for a predetermined positive electrode active material to be measured (see Examples described later).

In the positive electrode active material having the above configuration, in the lithium transition metal composite oxide serving as an essential component and containing Mn, the local maximum Mn concentration measured by the above cross section TEM-EDX is larger than the average Mn concentration measured by the ICP emission spectroscopic analysis by 4 atm% or less (i.e., 104atm% or less with respect to the average Mn concentration), which means there is no excessive local uneven distribution of Mn. Accordingly, in the secondary battery including the positive electrode active material in the positive electrode, the formation of a lithium manganese-containing composite oxide (for example, LiMn₂O₄) having a high resistance spinel structure is suppressed. Thus, it is possible to suppress increase in internal resistance of the battery for a long period of time (for example, increase in resistance after endurance). Therefore, it is possible to improve the durability (for example, improve the cycle characteristics) of the secondary battery having such a configuration.

The lithium transition metal composite oxide having the above layered rock salt structure is represented by a general formula:

Li_{1 + x}Ni_{y}Co_{z}Mn_{(1 - y - z)}M_{α}O_{2 - β}A_{β}

where 0≤ x ≤ 0.7, 0.1 < y < 0.9, 0.1 < z < 0.4, 0≤ α ≤ 0.1, and 0 ≤ β ≤ 0.5;
M is not present, or one element or two or more elements selected from Zr, Mo, W, Mg, Ca, Na, Fe, Cr, Zn, Si, Sn, and Al; and
A is not present, or one element or two or more elements selected from F, Cl, and Br. By providing, as an essential component, a so-called ternary lithium transition metal composite oxide containing nickel (Ni), cobalt (Co) and manganese (Mn) as the transition metal elements, it is possible to improve the durability while maintaining a suitable battery capacity.

A full width at half maximum of a diffraction peak on a Miller index (003) plane that is measured by powder X-ray diffraction using a CuKa ray may be 0.06 degrees to 0.1 degree. When the full width at half maximum on the (003) plane of the positive electrode active material is within the above range, it is possible to realize a reduction in battery resistance.

At least a part of a surface of the positive electrode active material may be provided with a coat layer made of a metal oxide. In particular, examples of the metal oxide constituting the coat layer include tungsten oxide, titanium oxide and the combination thereof. With the positive electrode active material provided with such a coat layer, it is possible to suppress increase in resistance.

Further, by providing the positive electrode active material disclosed herein, it is also possible to provide a secondary battery having a positive electrode that includes the positive electrode active material. The secondary battery disclosed herein can realize a long-term reduction in battery internal resistance with the effects of the positive electrode active material as described above.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a sectional view schematically showing a configuration of a secondary battery constructed using a positive electrode active material according to an embodiment; and
FIG. 2 is a schematic view showing a configuration of a wound electrode body of the secondary battery constructed using the positive electrode active material according to the embodiment.

### DETAILED DESCRIPTION OF EMBODIMENTS

Hereinafter, embodiments according to the present invention will be described. Matters other than those specifically mentioned in the present specification and necessary for carrying out the present invention can be grasped as design matters of a person skilled in the art based on the related art of the technical field. The present invention can be carried out based on content disclosed in the present specification and common knowledge in the technical field. In the present specification, the expression of "A to B" indicating a numerical range means A or more and B or less. In the following drawings, the same reference signs are given to the members and portions that have the same effect. The dimensional relationships (length, width, thickness, etc.) in the drawings do not show the actual dimensional relationships.

Hereinafter, as an example of a secondary battery including the positive electrode active material disclosed herein, an embodiment in which the present invention is applied to a lithium ion secondary battery having a configuration in which a wound electrode body and a non-aqueous electrolyte are housed in a rectangular battery case (hereinafter, may be simply referred to as "secondary battery") will be specifically described, which does not mean that the present invention is limited to the embodiment.

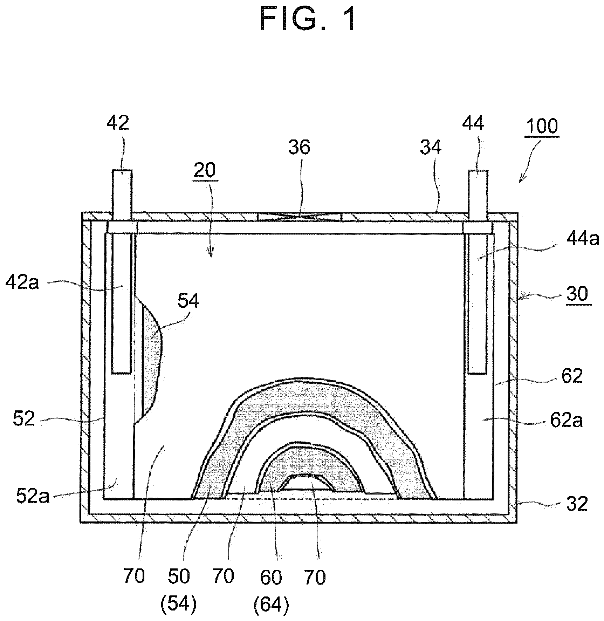

As shown in FIG. 1, a secondary battery 100 has a configuration in which a flatly wound electrode body (wound electrode body) 20 and a non-aqueous electrolyte are housed in a flat rectangular (box-shaped) battery case 30. The battery case 30 includes a flat rectangular parallelepiped battery case main body 32 having an open upper end and a lid 34 that closes the opening. The upper surface of the battery case 30 (that is, the lid 34) is provided with a positive electrode terminal 42 for external connection that is electrically connected to the positive electrode of the wound electrode body 20, and a negative electrode terminal 44 that is electrically connected to the negative electrode of the wound electrode body 20. The lid 34 is also provided with a safety valve 36 for discharging gas generated inside the battery case 30 to the outside of the battery case 30. Examples of the material of the battery case 30 include metal materials such as aluminum and steel; resin materials such as polyphenylene sulfide resin and polyimide resin. The shape of the case (outer shape of the container) may be, for example, a circular shape (cylindrical shape, coin shape, button shape), a hexahedral shape (rectangular parallelepiped shape, cubic shape), a bag shape, or a shape obtained by processing and deforming those shapes.

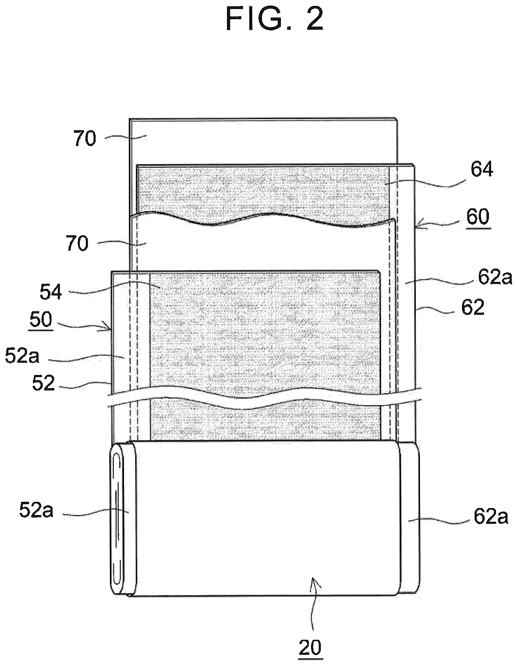

As shown in FIG. 2, the wound electrode body 20 according to the present embodiment has a long sheet structure (sheet-shaped electrode body) before assembling. The wound electrode body 20 has a flat shape obtained by stacking a positive electrode sheet 50 and a negative electrode sheet 60 with a long separator sheet 70 interposed therebetween and winding them in the longitudinal direction. The positive electrode sheet 50 includes a positive electrode active material layer 54 provided on one surface or both surfaces (both surfaces in the present embodiment) of a long positive electrode current collector 52 made of metal such as aluminum along the longitudinal direction. The negative electrode sheet 60 includes a negative electrode active material layer 64 provided on one surface or both surfaces (both surfaces in the present embodiment) of a long negative electrode current collector 62 made of metal such as copper along the longitudinal direction. In the central portion of the wound electrode body 20 in the winding axis direction, a wound core portion (that is, a portion at which the positive electrode active material layer 54 of the positive electrode sheet 50, the negative electrode active material layer 64 of the negative electrode sheet 60, and the separator sheet 70 are closely stacked) is provided. Further, at both ends of the wound electrode body 20 in the winding axis direction, a positive electrode active material layer non-forming portion 52a in the positive electrode sheet 50 and a negative electrode active material layer non-forming portion 62a in the negative electrode sheet 60 stick out from the winding core portion. A positive electrode current collector plate 42a and a negative electrode current collector plate 44a are attached to the positive electrode active material layer non-forming portion 52a and the negative electrode active material layer non-forming portion 62a, respectively, and the positive electrode active material layer non-forming portion 52a and the negative electrode active material layer non-forming portion 62a are electrically connected to the positive electrode terminal 42 (FIG. 1) and the negative electrode terminal 44 (FIG. 1), respectively.

The positive electrode active material layer 54 contains at least the positive electrode active material. Hereinafter, the positive electrode active material disclosed here will be described. The positive electrode active material disclosed here contains, as an essential component, a lithium transition metal composite oxide having a layered rock salt structure and containing at least manganese (Mn) as a transition metal element. In such a positive electrode active material, a concentration difference between an average Mn concentration and a local maximum Mn concentration is equal to or less than 4atm%. The average Mn concentration is measured based on inductively coupled plasma (ICP) emission spectroscopic analysis of the positive electrode active material. The local maximum Mn concentration is measured based on energy dispersive X-ray analysis with a transmission electron microscope (TEM-EDX). The crystal structure of the positive electrode active material can be observed by X-ray diffraction (XRD) measurement.

The lithium transition metal composite oxide having the above layered rock salt structure is a lithium transition metal composite oxide represented by a general formula:

Li_{1 + x}Ni_{y}Co_{z}Mn_{(1 - y - z)}M_{α}O_{2 - β}A_{β}.

Here, in the above formula, x, y, z, α, and β are 0 ≤ x ≤ 0.7, 0.1 <y < 0.9, 0.1 <z < 0.4, 0 ≤ α ≤ 0.1 and 0 ≤ β ≤ 0.5, respectively. M is not present, or one element or two or more elements selected from Zr, Mo, W, Mg, Ca, Na, Fe, Cr, Zn, Si, Sn, and Al. A is not present, or one element or two or more elements selected from F, Cl, and Br.
By providing such a lithium transition metal composite oxide as an essential component, it is possible to improve the durability while maintaining a suitable battery capacity.

Ni is an additive element that contributes to the improvement of battery capacity. The value of y indicating the atomic ratio of Ni can be 0.3 or more and 0.7 or less, preferably 0.3 or more and 0.65 or less. Co is an additive element that contributes to the improvement of cycle characteristics. When the atomic ratio of Co is appropriate, the positive electrode active material has good cycle characteristics, that is, high durability. The value of z indicating the atomic ratio of Co can be preferably 0.15 or more and 0.35 or less. Mn is known to have the effect of improving thermal stability. The value of (1 - y - z) indicating the atomic ratio of Mn can be 0.1 or more and 0.4 or less, preferably 0.1 or more and 0.35 or less, and more preferably 0.15 or more and 0.35 or less.

Examples of the lithium transition metal composite oxide include lithium transition metal composite oxides having a layered rock salt structure, such as LiNi_{1/3}Co_{1/3}Mn_{1/3}O₂, LiNi_{0.5}Co_{0.2}Mn_{0.3}O₂, and LiNi_{0.6}Co_{0.2}Mn_{0.2}O₂. Among the above, LiNi_{1/3}Co_{1/3}Mn_{1/3}O₂ has excellent thermal stability and high theoretical density, and thus, is a preferable example.

The composition of the positive electrode active material can be observed, for example, by the following: - performing compositional analysis (element analysis) on a transmission electron microscopy (TEM) image with an energy dispersive X-ray spectrometry (EDX), the TEM image being obtained by observing a cross section of the positive electrode active material (typically the positive electrode active material layer) with the transmission electron microscope; and- performing the compositional analysis (element analysis) on the positive electrode active material with the ICP emission spectroscopic analysis; or the like.

Using the TEM-EDX, the local maximum Mn concentration (atm%) of the positive electrode active material disclosed here can be measured. The specific measurement procedure includes the following, for example.
(1) Cross section polisher (CP) process is performed on the positive electrode active material (typically powder), the positive electrode active material layer containing the positive electrode active material, and a material in which the positive electrode active material is embedded in a resin material, and thus, a sample to be observed is obtained.
(2) The sample is observed with the TEM at such a magnification that each particle of the positive electrode active material fits within the observation field of view (for example, 50,000 times).
(3) In the above TEM observation, element mapping by the EDX is performed to confirm presence or absence of Mn element in a desired observation field of view. Then, a portion having the highest Mn detection intensity in the observation field of view is selected, and a region including the portion is magnified at a higher magnification (for example, 100,000 times) and observed.
(4) In the field of view of the magnified observation, the element mapping is performed with the EDX, and the portion having the highest Mn detection intensity is selected. For each of the Ni element, the Co element, and the Mn element, a spot mass spectrometric analysis with a predetermined EDX spot size (for example, about 10 nm × 10 nm in Examples described later) is performed on the relevant portion, and the atomic number concentration of Mn (atm%) is calculated.

The above measurement is performed for a plurality of fields of view (for example, N = 3 or more, 5 or more, 10 or more, or 15 or more, N = 10 in Examples described later), and the highest Mn concentration (atm%) among them is set as the local maximum Mn concentration (atm%).

Using the ICP emission spectroscopic analysis, the average Mn concentration of the positive electrode active material disclosed herein can be measured. Examples of the way of measurement include the following.
(1) A predetermined amount (for example, 1 g) of positive electrode active material (typically a powder material) is heated in a solvent (for example, a mixed solution of 5 ml of nitric acid and 10 ml of hydrogen peroxide solution, both commercially available) using a heater at 300°C until complete dissolution can be visually confirmed. The residue is removed by filtration, and the volume is adjusted to 100 ml with pure water.
(2) The content (mass%) of each element of Ni, Co, and Mn is measured using a commercially available ICP emission spectroscopic analyzer.
(3) The residue obtained by the above filtration is collected and heated in the above solvent using a heater at 300°C for 10 minutes. The residue is removed by filtration, and the volume is adjusted to 100 ml with pure water.
(4) The ICP emission spectroscopic analysis is performed to measure the content (mass%) of each of the above elements. The Mn concentration (atm%) of the sample is calculated from the content (mass%) of each element obtained.

The above operations (1) to (4) are repeated a plurality of times (for example, twice, three times, four times, and in Examples described later, three times) to calculate an average value, and the average value is set as the average Mn concentration (atm%).

In the positive electrode active material disclosed here, the concentration difference between the average Mn concentration measured by the above method and the local maximum Mn concentration is 4atm% or less (for example, 0atm% or more and 4atm% or less). In the positive electrode active material disclosed here, the concentration difference (that is, local maximum Mn concentration (atm%) - average Mn concentration (atm%)) is 4atm% or less, which means that Mn is not locally unevenly distributed. When the local uneven distribution of Mn (that is, formation of a spinel structured lithium manganese-containing composite oxide) is suppressed, battery resistance can be reduced. Further, when the concentration difference is 2atm% or less (for example, 0atm% or more and 2atm% or less), a more preferable effect of reducing the battery resistance can be realized.

The positive electrode active material disclosed herein is typically in the form of particles (granules). The average particle size (D50) of the positive electrode active material particles is not particularly limited, but is, for example, 0.05 µm or more and 20 µm or less, preferably 0.5 µm or more and 15 µm or less, and more preferably 3 µm or more and 15 µm or less. The average particle size (D50) of the positive electrode active material particles can be determined by, for example, a laser diffraction/scattering method and the like.

In the positive electrode active material disclosed here, in a powder X-ray diffraction pattern using CuKa rays, a full width at half maximum of the diffraction peak obtained by the diffraction plane of the Miller index (003) can be 0.05 deg.(°) to 0.12 deg.(°). Thus, the battery resistance of the secondary battery including the positive electrode active material can be suitably reduced. When the full width at half maximum falls within the range of 0.06 deg. to 0.1 deg., the battery resistance can be more suitably reduced.

Here, the powder X-ray diffraction measurement using CuKa rays may be performed by causing X-rays (CuKa rays) emitted from an X-ray source to be incident on the sample surface of the sample. The sample surface may be a surface made of the positive electrode active material (typically powder), and a surface on which the positive electrode active material is bound with a binder to actually form a positive electrode (surface of the positive electrode active material layer). The angle difference between the diffraction direction and the incident direction of the X-ray (diffraction angle 2θ (for example, 10 deg. to 90 deg., in Examples described later, 18 deg.)) and the diffraction X-ray intensity are measured and a diffraction pattern is obtained. From the obtained diffraction pattern, the full width at half maximum of the diffraction peak derived from the (003) plane can be calculated. Such X-ray diffraction measurement and calculation of the (003) plane full width at half maximum can be performed using X-ray diffraction measurement devices commercially available from various measurement device manufacturers and analysis software attached thereto.

The positive electrode active material disclosed herein preferably includes a coat layer made of a metal oxide on at least a part of the surface. It has been said that when a coating material (coat layer) made of a metal oxide is provided on the surface of the positive electrode active material, an effect of suppressing decomposition of an electrolyte is obtained. In addition to the effect of suppressing decomposition of the electrolyte, the positive electrode active material disclosed here has an effect of suppressing the local formation of the spinel structure composite oxide, and can more suitably realize an effect of suppressing increase in battery resistance.

As the metal oxide, a metal oxide used for forming a coat layer of the secondary battery of this type can be selected without particular limitation. For example, niobium oxide, tantalum oxide, titanium oxide, aluminum oxide, zirconium oxide, tungsten oxide and the like are conceivable. The metal oxide constituting the coat layer may be one of these compounds, or may be two or more thereof. Preferably, the metal oxide is tungsten oxide and/or titanium oxide. Particularly preferably, the metal oxide is tungsten oxide. Tungsten oxide is superior in the surface protection effect for the positive electrode active material. Further, when tungsten oxide is solid-solved (solid solution state) on the surface layer side by a firing process during formation of the coat layer, the lattice constant of the surface layer of the positive electrode active material is increased, whereby an effect of increasing the lithium diffusion rate can be realized. Specific preferred examples of the metal oxide are given in each of Examples described later.

The positive electrode active material disclosed here can be produced, for example, by a method described in Examples described later. Roughly speaking, the method includes: causing a transition metal component containing manganese (raw material compound) to react in water under predetermined temperature conditions (for example, from room temperature to 60°C) to produce a precursor (co-precipitation precursor) composed of the transition metal compound; preparing a mixture containing the precursor and a lithium compound; and firing the mixture to produce a lithium transition metal composite oxide.

As described in the following Examples, the above production method includes stirring the reaction solution containing the material at a predetermined rotation speed using a predetermined stirring device (for example, a paddle blade equipped with a stirring motor) when producing the precursor. By appropriately adjusting the rotation speed, for example, the concentration difference between the average Mn concentration and the local maximum Mn concentration can be adjusted. As the rotation speed increases, the concentration difference tends to decrease. The rotation speed of stirring is preferably in the range of, for example, 500 rpm to 3500 rpm (for example, 700 rpm to 3000 rpm).

The above firing can be performed at a temperature of approximately 850°C to 1000°C in an oxidizing atmosphere. By appropriately adjusting the firing temperature, for example, the full width at half maximum of the diffraction peak on the (003) plane of the positive electrode active material can be adjusted. When the firing temperature is more preferably set to 900°C to 980°C, further preferably to 920°C to 960°C, for example, it is possible to suppress transition of Ni to the Li layer during firing, that is, cation mixing. In the above temperature ranges, the diffusion of lithium ions in the solid is not hindered, and thus, the increase in battery resistance can be suitably suppressed.

Further, when producing a positive electrode active material having the above-mentioned coat layer on at least a part of the surface thereof, a metal oxide for forming the coat layer is separately prepared and a coat layer can be formed by a known method (for example, a known method of causing the active material to form a coating). As an example of the above known method, a mechanochemical process performed using various mechanochemical devices is particularly preferable. For example, using a mixing device such as an automatic mortar and by pulverization using a ball mill, a planetary mill, a bead mill or the like, a desired mechanochemical reaction occurs, and a coat layer can be formed on at least a part of the surface of the lithium transition metal composite oxide. Then, after the mechanochemical process, the firing process may be performed at a temperature of approximately 200°C to 1000°C (for example, 300°C to 800°C).

Examples of the negative electrode current collector 62 that constitutes the negative electrode sheet 60 include copper foil. The negative electrode active material layer 64 contains a negative electrode active material. As the negative electrode active material, a carbon material such as graphite, hard carbon, or soft carbon can be used. The negative electrode active material layer 64 may further contain a binder, a thickener, and the like. As the binder, for example, styrene butadiene rubber (SBR) or the like can be used. As the thickener, for example, carboxymethyl cellulose (CMC) or the like can be used.

As the separator sheet 70, various porous sheets similar to those conventionally used for this type of secondary battery can be used, and for example, a porous resin sheet made of resin such as polyethylene (PE) or polypropylene (PP) can be used. Such a porous sheet may have a single-layer structure or a laminated structure of two or more layers (for example, a three-layer structure in which a PP layer is stacked on both sides of a PE layer). The separator sheet70 may include a heat resistant layer (HRL).

As the non-aqueous electrolyte, the same as those used for the known lithium ion secondary battery can be used, and typically, an organic solvent (non-aqueous solvent) containing a supporting salt can be used. As the non-aqueous solvent, aprotic solvents such as carbonates, esters and ethers can be used. Among them, carbonates, for example, ethylene carbonate (EC), diethyl carbonate (DEC), dimethyl carbonate (DMC), ethyl methyl carbonate (EMC) and the like can be preferably adopted. Alternatively, a fluorinated solvent such as fluorinated carbonates including monofluoroethylene carbonate (MFEC), difluoroethylene carbonate (DFEC), monofluoromethyldifluoromethyl carbonate (F-DMC), and trifluorodimethyl carbonate (TFDMC) can be preferably used. Such non-aqueous solvents can be used singly or in appropriate combination of two or more. As the supporting salt, for example, lithium salts such as LiPF6, LiBF4, and lithium bis(fluorosulfonyl)imide (LiFSI) can be preferably used. The concentration of the supporting salt is preferably 0.7 mol/L or more and 1.3 mol/L or less. The non-aqueous electrolyte may contain components other than the above-mentioned non-aqueous solvent and supporting salt, for example various additives such as a gas generator, a film-forming agent, a dispersant, and a thickener, as long as the effects of the present invention are not significantly impaired.

The secondary battery 100 can be used for various purposes. Suitable applications include a driving power source mounted on vehicles such as electric vehicles (EVs), hybrid vehicles (HVs), and plug-in hybrid vehicles (PHVs). The secondary battery 100 can also be used in the form of an assembled battery in which a plurality of the secondary batteries 100 are electrically connected.

According to the technique disclosed herein, the local accumulation of the Mn concentration in the positive electrode active material is suppressed, and thus the local formation of the spinel-structured composite oxide that can have higher resistance than other parts is preferably suppressed. As a result, increase in internal resistance of the secondary battery over a long period of time (for example, increase in resistance after endurance) can be suppressed, and the durability of the secondary battery can be improved.

A rectangular secondary battery provided with a flat wound electrode body has been described above as an example. However, the positive electrode active material disclosed here can also be used for other types of secondary batteries according to known methods. For example, the positive electrode active material disclosed here can be used to construct a secondary battery including a laminated electrode body. Further, a cylindrical secondary battery, a laminated secondary battery, or the like can be constructed using the positive electrode active material disclosed here. It is also possible to construct an all-solid-state lithium ion secondary battery using a solid electrolyte instead of the non-aqueous electrolyte and using the positive electrode active material disclosed here according to a known method.

Test examples of the present invention will be described below, but it is not intended to limit the present invention to the test examples described below.

### 1. Production of Positive Electrode Active Material

### Example 1

First, LiNi_{1/3}Co_{1/3}Mn_{1/3}O₂ particles having a layered rock salt structure were produced as a positive electrode active material. Specifically, cobalt sulfate, nickel sulfate, and manganese sulfate serving as raw material compounds were weighed and all of them were dissolved in ion-exchanged water to produce 0.7M aqueous sulfate solution having a molar ratio of Co:Ni:Mn of 1:1:1. Ion-exchanged water was poured to a reaction vessel of 2 dm³ such that a total amount of the solution was 0.75 dm³. The temperature of the reaction vessel was set to 50°C (± 2°C), and the above aqueous sulfate solution was dropped at a speed of 3 ml/min while stirring the reaction solution at a rotation speed of 700 rpm using a paddle blade equipped with a stirring motor. From the start to the end of the dropping, an aqueous solution containing 0.7M sodium carbonate and 0.7M ammonia was appropriately dropped so that the pH in the reaction vessel was always maintained at 11 (± 0.05). After completion of the dropping, stirring in the reaction vessel was continued for another one hour. After the stirring was stopped, the mixture was allowed to stand for 12 hours or more. Next, particles of co-precipitated carbonate generated in the reaction vessel were separated using a suction filtration device, and sodium ions adhering to the particles were washed and removed using ion-exchanged water. Then, the resultant particles were dried at 400°C using an electric furnace under normal pressure in an air atmosphere. Then, in order to make the particle size uniform, the particles were crushed in an automatic mortar for several minutes. In this way, a co-precipitated carbonate precursor was prepared. Lithium carbonate was added to the co-precipitated carbonate precursor and mixed well using the automatic mortar to prepare a mixed powder having a molar ratio of Li:(Co, Ni, Mn) of 110:100. Then, the mixed powder was molded into pellets using a pellet molding machine. One of the pellets was placed on a full-length alumina boat, set in a box-type electric furnace, and fired at 900°C in an air atmosphere under normal pressure for 10 hours (firing process 1). After firing, the heater was switched off and the alumina boat was left to be cooled naturally while being still in the furnace. Then, the pellet was taken out and crushed for several minutes by the automatic mortar to make the particle size uniform. Thus, the positive electrode active material according to Example 1 was obtained.

### Example 2

A positive electrode active material according to Example 2 was produced in the same manner as in Example 1 except that the stirring in producing the co-precipitated carbonate precursor was performed at a rotation speed of 1500 rpm.

### Example 3

A positive electrode active material according to Example 3 was produced in the same manner as in Example 1 except that the stirring in producing the co-precipitated carbonate precursor was performed at a rotation speed of 2000 rpm.

### Example 4

A positive electrode active material according to Example 4 was produced in the same manner as in Example 1 except that the stirring in producing the co-precipitated carbonate precursor was performed at a rotation speed of 3000 rpm.

### Example 5

A coat layer made of TiO₂ was formed on the surface of the positive electrode active material of Example 2 to produce a positive electrode active material according to Example 5. Specifically, the positive electrode active material of Example 2 and TiO₂ were mixed, and then further subjected to a mixing process using an automatic mortar. The mixture was fired at 600°C in an air atmosphere under normal pressure for 10 hours. The amount of TiO₂ used was set to 1% by mass with respect to the positive electrode active material of Example 2.

### Example 6

A coat layer made of Al₂O₃ was formed on the surface of the positive electrode active material of Example 2 to produce a positive electrode active material according to Example 6. Specifically, the positive electrode active material of Example 2 and Al₂O₃ were mixed, and then further subjected to the mixing process using the automatic mortar. The mixture was fired at 600°C in an air atmosphere under normal pressure for 10 hours. The amount of Al₂O₃ used was set to 1% by mass with respect to the positive electrode active material of Example 2.

### Example 7

A coat layer made of ZrO₂ was formed on the surface of the positive electrode active material of Example 2 to produce a positive electrode active material according to Example 7. Specifically, the positive electrode active material of Example 2 and Zr02 were mixed, and then further subjected to the mixing process using the automatic mortar. The mixture was fired at 600°C in an air atmosphere under normal pressure for 10 hours. The amount of Zr02 used was set to 1% by mass with respect to the positive electrode active material of Example 2.

### Example 8

A coat layer made of WO₃ was formed on the surface of the positive electrode active material of Example 2 to produce a positive electrode active material according to Example 8. Specifically, the positive electrode active material of Example 2 and WO₃ were mixed, and then further subjected to the mixing process using the automatic mortar. The mixture was fired at 600°C in an air atmosphere under normal pressure for 10 hours. The amount of WO3 used was set to 1% by mass with respect to the positive electrode active material of Example 2.

### Example 9

A positive electrode active material was produced in the same manner as in Example 1 except that the temperature of the firing process 1 was set to 920°C. A coat layer made of TiO₂ was formed on the surface of the positive electrode active material to produce the positive electrode active material according to Example 9. Specifically, the positive electrode active material of Example 1 and TiO₂ were mixed, and then further subjected to the mixing process using the automatic mortar. The mixture was fired at 600°C in an air atmosphere under normal pressure for 10 hours. The amount of TiO₂ used was set to 1% by mass with respect to the positive electrode active material of Example 1.

### Example 10

A positive electrode active material according to Example 10 was produced in the same manner as in Example 9 except that the temperature of the firing process 1 was set to 940°C.

### Example 11

A positive electrode active material according to Example 11 was produced in the same manner as in Example 9 except that the temperature of the firing process 1 was set to 960°C.

### Example 12

A positive electrode active material according to Example 12 was produced in the same manner as in Example 9 except that the temperature of the firing process 1 was set to 980°C.

### Comparative example 1

A positive electrode active material according to Comparative Example 1 was produced in the same manner as in Example 1 except that the stirring in producing the co-precipitated carbonate precursor was performed at a rotation speed of 300 rpm.

### 2. Measurement of Average Mn Concentration Based on ICP Emission Spectroscopic Analysis

One gram of positive electrode active material according to each of Examples and Comparative Example was weighed, and each was heated at 300°C using a heater in a mixed solution of 5 ml of nitric acid and 10 ml of hydrogen peroxide solution (both commercially available) until total dissolution could be confirmed visually. The residue was filtered and the volume was adjusted to 100 ml with pure water, and the content (mass%) of each element of Ni, Co, and Mn was measured based on the ICP emission spectroscopy. The residue was collected and heated at 300°C for 10 minutes using a heater in the mixed solution. The residue was filtered and the volume was adjusted to 100 ml with pure water, and the content (mass%) of each element of Ni, Co, and Mn was measured based on the ICP emission spectroscopy. The Mn concentration (atm%) in the sample was calculated from the content of each element obtained by the above method. The average value was calculated from the Mn concentrations (atm%) obtained by performing the above operation three times. The average value was set as the average Mn concentration (atm%) in the positive electrode active material according to each Example and Comparative Example. As the ICP emission spectroscopic analyzer, an ICP emission spectroscopic analyzer manufactured by Hitachi High-Tech Science Co., Ltd. was used.

### 3. Measurement of Local Maximum Mn Concentration Based on TEM-EDX

TEM-EDX was performed in order to measure the local maximum Mn concentration of the positive electrode active material according to each of the above Examples and Comparative Example. Specifically, the CP process was performed on each positive electrode active material to obtain a sample to be observed. The sample was observed by TEM at a magnification of 50,000 times. In the above TEM observation, element mapping was performed with EDX to confirm presence or absence of Mn element in a desired observation field of view. A portion having the highest Mn detection intensity was selected in the above observation field of view, and the region including the portion was observed at a magnification of 100,000 times. In the field of view of the magnified observation, the element mapping was performed with the EDX, and the portion having the highest Mn detection intensity was selected. A spot mass spectrometric analysis was performed on each of Ni, Co, and Mn in the relevant portion, and the atomic number concentration (atm%) of Mn was calculated. The size of the EDX spot was 10 nm × 10 nm. The above measurement was performed for 10 visual fields (N = 10), and the highest Mn concentration (atm%) among them was defined as the local maximum Mn concentration (atm%). As the EDX device, JEM-ARM300F manufactured by JEOL Ltd. was used.

### 4. Calculation of Difference between Local Maximum Mn Concentration and Average Mn Concentration

For the positive electrode active material according to each of the above Examples and Comparative Example, the difference between the obtained local maximum Mn concentration and the average Mn concentration was calculated. The results are shown in the "Local Mn concentration" column of Table 1.

### 5. Measurement of Full Width at Half Maximum on (003) Plane

The positive electrode active material according to each of the above Examples and Comparative Example was subjected to powder X-ray diffraction using CuKa rays, and the full width at half maximum on the (003) plane was measured. Each positive electrode active material (powder) was used as a sample. The CuKa ray was incident on the sample, and the full width at half maximum of the diffraction peak derived from the (003) plane at the diffraction angle of 2θ = 18deg. was calculated. As the measurement device, the X-ray diffraction measurement device MultiFlex manufactured by Rigaku Co., Ltd. and analysis software JADE attached thereto were used. The results are shown in Table 1.

### 6. Production of Batteries for Evaluation

The positive electrode active material according to each of Examples and Comparative Example produced as described above, acetylene black (AB) serving as a conductive material, and polyvinylidene fluoride (PVDF) serving as a binder were mixed at a mass ratio of positive electrode active material:AB:PVDF = 94:3:3 in N-methylpyrrolidone (NMP) with a planetary mixer to prepare a slurry for forming a positive electrode active material layer. The slurry was applied to both sides of aluminum foil having a thickness of 15 µm, followed by drying and then pressing to produce a positive electrode sheet. A natural graphite (C) serving as a negative electrode active material, styrene-butadiene rubber (SBR) serving as a binder, and carboxymethyl cellulose (CMC) serving as a thickener were mixed at a mass ratio of C:SBR:CMC = 98:1:1 in ion-exchanged water to prepare a slurry for forming a negative electrode active material layer. The slurry was applied to both sides of copper foil having a thickness of 10 µm, followed by drying and then pressing to produce a negative electrode sheet. Further, two separator sheets (a porous polyolefin sheet having a thickness of 20 µm and a three-layer structure of PP/PE/PP) were prepared. The prepared positive electrode sheet, the negative electrode sheet, and the prepared two separator sheets were superposed and wound to produce a wound electrode body. Electrode terminals were attached to the positive electrode sheet and the negative electrode sheet of the produced wound electrode body by welding, which were housed in a battery case having a liquid injection port (in this test example, a housing made of a laminated film). Subsequently, a non-aqueous electrolyte was injected from the liquid injection port of the battery case, and the liquid injection port was hermetically sealed. As the non-aqueous electrolyte, a non-aqueous electrolyte was used in which LiPF6 serving as a supporting salt was dissolved, at a concentration of 1.0 mol/L, in a mixed solvent containing ethylene carbonate (EC), dimethyl carbonate (DMC), and ethyl methyl carbonate (EMC) in a volume ratio of 3:4:3. As described above, a total of 13 types of secondary batteries for evaluation were obtained. The battery capacities were 10 mAh.

The batteries were placed in an environment of 25°C. Activation (initial charging) was performed by a constant current-constant voltage method. After constant current charging was performed on each secondary battery for evaluation to 4.1 V at a current value of 1/3C, constant voltage charging was performed until the current value became 1/50C so that the battery was fully charged. Then, constant current discharging was performed on each secondary battery for evaluation to 3.0 V at a current value of 1/3C.

### 7. Initial Resistance Evaluation

A state of charge (SOC) of each secondary battery for evaluation was adjusted to 50% and the secondary battery was then placed in an environment of 25°C. Discharging was performed for 10 seconds at a current value of 100 Ah, and the voltage value 10 seconds after the start of discharging was measured to calculate the initial battery resistance. The resistance in the secondary battery for evaluation of Comparative Example 1 was set to 100, and the ratio of resistance in the secondary battery for evaluation of each of Examples was obtained. The results are shown in Table 1.

### 8. Resistance Evaluation after Endurance

After adjusting the SOC of each secondary battery for evaluation to 100%, the secondary battery was stored in an environment of 60°C for 30 days. The voltage at the start of storage was 4.1 V. After storage, the secondary battery was discharged at a current value of 100 Ah at 25°C for 10 seconds. The voltage value 10 seconds after the start of discharging was measured, and the battery resistance was calculated. The initial resistance in the secondary battery for evaluation of Comparative Example 1 was set to 100, and the ratio of the resistance after storage (resistance evaluation after endurance) was obtained. The results are shown in Table 1.

**Table 1**

| Table 1 | | | | | |
|---|---|---|---|---|---|
| | Local Mn concentration (atm%) | Coat layer | (003) plane full width at half maximum | Initial resistance | Resistance after endurance |
| Example 1 | +4 | None | 0.11 | 90 | 126 |
| Example 2 | +2 | None | 0.11 | 80 | 104 |
| Example 3 | +1 | None | 0.11 | 81 | 105 |
| Example 4 | +0.5 | None | 0.11 | 79 | 103 |
| Example 5 | +2 | Ti0₂ | 0.11 | 80 | 96 |
| Example 6 | +2 | Al₂0₃ | 0.11 | 80 | 96 |
| Example 7 | +2 | Zr0₂ | 0.11 | 80 | 98 |
| Example 8 | +2 | W0₃ | 0.11 | 78 | 92 |
| Example 9 | +2 | Ti0₂ | 0.1 | 75 | 83 |
| Example 10 | +2 | Ti0₂ | 0.07 | 70 | 74 |
| Example 11 | +2 | Ti0₂ | 0.06 | 75 | 83 |
| Example 12 | +2 | Ti0₂ | 0.05 | 85 | 102 |
| Comparative Example 1 | +5 | None | 0.11 | 100 | 150 |

From the results of Examples 1 to 12 and Comparative Example 1, it can be understood that when the concentration difference between the average Mn concentration and the local maximum Mn concentration was 4 atm% or less, the initial resistance became small and increase in resistance after endurance was suppressed. From the results of Examples 9 to 11, it can be understood that when the full width at half maximum on the (003) plane was 0.06 deg. to 0.1 deg., the initial resistance became smaller and increase in resistance after endurance was more preferably suppressed. From the results of Examples 5 to 12, it can be understood that when a coat layer made of a metal oxide was provided on at least a part of the surface, the initial resistance became smaller and increase in resistance after endurance was more preferably suppressed. Further, it can be understood that when the coat layer was made of tungsten oxide and/or titanium oxide, the effect of the present invention was more preferably exhibited.

Although the present invention has been described in detail above, the above-described embodiments and test examples are merely examples, and the invention disclosed herein includes various modifications and alternation made to the above-described specific examples. A secondary battery such as a lithium ion secondary battery provided with a positive electrode active material disclosed herein exhibits excellent output characteristics and durability as described above. Therefore, the secondary battery can be suitably used as a driving power source for a motor (electric motor) mounted on a vehicle such as an automobile, for example.

## Claims

1. A positive electrode active material having a granular shape and used for a positive electrode of a secondary battery, the positive electrode active material comprising
a lithium transition metal composite oxide containing manganese as a transition metal element and having a layered rock salt structure, **characterized in that**
a concentration difference between an average Mn concentration and a local maximum Mn concentration is equal to or less than 4atm%, the average Mn concentration being measured based on inductively coupled plasma emission spectroscopic analysis of the positive electrode active material, and the local maximum Mn concentration being measured based on energy dispersive X-ray analysis with a transmission electron microscope, and **in that**
the lithium transition metal composite oxide having the layered rock salt structure is represented by a general formula:
Li_{1 + x}Ni_{y}Co_{z}Mn_{(1 - y - z)}M_{α}O_{2 - β}A_{β}
where 0 ≤ x ≤ 0.7, 0.1 <y < 0.9, 0.1 < z < 0.4, 0 ≤ α ≤ 0.1, 0 ≤ β ≤ 0.5;
M is not present, or one element or two or more elements selected from Zr, Mo, W, Mg, Ca, Na, Fe, Cr, Zn, Si, Sn, and Al; and
A is not present, or one element or two or more elements selected from F, Cl, and Br.

2. The positive electrode active material according to claim 1 , wherein a full width at half maximum of a diffraction peak on a Miller index (003) plane that is measured by powder X-ray diffraction using a CuKa ray is 0.06 degrees to 0.1 degree.

3. The positive electrode active material according to claim 1 or 2, wherein at least a part of a surface of the positive electrode active material is provided with a coat layer made of a metal oxide.

4. The positive electrode active material according to claim 3, wherein the metal oxide consists of at least one selected from tungsten oxide and titanium oxide.

5. A secondary battery comprising a positive electrode that includes the positive electrode active material according to any one of claims 1 to 4.

## Patentansprüche

1. Positivelektrodenaktivmaterial mit einer körnigen Gestalt, das für eine Positivelektrode einer Sekundärbatterie verwendet wird, wobei das Positivelektrodenaktivmaterial aufweist:
ein Lithium-Übergangsmetallverbundoxid, das Mangan als ein Übergangsmetallelement enthält und eine geschichtete Steinsalzstruktur aufweist, **dadurch gekennzeichnet, dass**
eine Konzentrationsdifferenz zwischen einer mittleren Mn-Konzentration und einer lokalen maximalen Mn-Konzentration gleich oder niedriger ist als 4 atm%, wobei die mittleren Mn-Konzentration auf Basis einer Emissionsspektralanalyse mit induktiv gekoppeltem Plasma des Positivelektrodenaktivmaterials gemessen wird, und wobei die lokale maximale Mn-Konzentration auf Basis einer energiedispersiven Röntgenanalyse mit einem Transmissionselektronenmikroskop gemessen wird, und dadurch, dass
das Lithium-Übergangsmetallverbundoxid, das die geschichtete Steinsalzstruktur aufweist, durch die folgende allgemeine Formel dargestellt wird:
Li₁₊ₓNi_{y}Co_{z}Mn_{(1-y-z)}M_{α}O_{2-β}A_{β}
wobei 0≤ x ≤ 0,7, 0,1 < y < 0,9, 0,1 < z < 0,4, 0≤ α ≤ 0,1, 0 ≤ β ≤ 0,5;
wobei M nicht vorhanden ist, oder ein Element oder zwei oder mehr Elemente, die aus Zr, Mo, W, Mg, Ca, Na, Fe, Cr, Zn, Si, Sn und Al ausgewählt sind; und
wobei A nicht vorhanden ist, oder ein Element oder zwei oder mehr Elemente, die aus F, Cl und Br ausgewählt sind.

2. Positivelektrodenaktivmaterial nach Anspruch 1, wobei eine Halbwertsbreite einer Beugungsspitze auf einer Miller-Index (003)-Ebene, die durch Pulverröntgendiffraktometrie unter Verwendung eines CuKa-Strahls gemessen wird, 0,06 Grad bis 0,1 Grad beträgt.

3. Positivelektrodenaktivmaterial nach Anspruch 1 oder 2, wobei zumindest ein Teil einer Oberfläche des Positivelektrodenaktivmaterials mit einer Beschichtung versehen ist, die aus einem Metalloxid besteht.

4. Positivelektrodenaktivmaterial nach Anspruch 3, wobei das Metalloxid aus zumindest einem besteht, das aus Wolframoxid und Titanoxid ausgewählt ist.

5. Sekundärbatterie, aufweisend eine Positivelektrode, die das Positivelektrodenaktivmaterial nach einem der Ansprüche 1 bis 4 beinhaltet.

## Revendications

1. Matière active d'électrode positive ayant une forme granulaire et utilisée pour une électrode positive d'un accumulateur secondaire, la matière active d'électrode positive comprenant
un oxyde composite de lithium et métal de transition contenant du manganèse comme un élément de métal de transition et présentant une structure de sel gemme disposé en couches, **caractérisée en ce que**
une différence de concentration entre une concentration moyenne en Mn et une concentration maximum locale en Mn est inférieure ou égale à 4 % atm, la concentration moyenne en Mn étant mesurée sur la base d'une analyse spectroscopique à émission de plasma couplée inductivement de la matière active d'électrode positive, et la concentration maximum locale en Mn étant mesurée sur la base d'une analyse aux rayons X à dispersion d'énergie avec un microscope électronique à transmission, et **en ce que**
l'oxyde composite de lithium et métal de transition ayant la structure de sel gemme disposé en couches est représenté par une formule générale :
Li₁₊ₓNi_{y}CO_{z}Mn_{(1-y-z)}M_{α}O_{2-β}A_{β}
où 0 ≤ x ≤ 0,7, 0,1 < y < 0,9, 0,1 < z < 0,4, 0 ≤ α ≤ 0,1, 0 ≤ β ≤ 0,5 ;
M n'est pas présent, ou est un élément ou deux éléments ou plus choisis parmi Zr, Mo, W, Mg, Ca, Na, Fe, Cr, Zn, Si, Sn, et Al ; et
A n'est pas présent, ou est un élément ou deux éléments ou plus choisis parmi F, Cl, et Br.

2. Matière active d'électrode positive selon la revendication 1, dans laquelle une largeur complète à mi-maximum d'un pic de diffraction sur un plan d'indice Miller (003) qui est mesurée par diffraction aux rayons X de poudre en utilisant un rayon CuKα est de 0,06 degrés à 0,1 degré.

3. Matière active d'électrode positive selon la revendication 1 ou 2, dans laquelle au moins une partie d'une surface de la matière active d'électrode positive est munie d'une couche de revêtement constituée d'un oxyde de métal.

4. Matière active d'électrode positive selon la revendication 3, dans laquelle l'oxyde de métal consiste en au moins un choisi parmi l'oxyde de tungstène et l'oxyde de titane.

5. Accumulateur secondaire comprenant une électrode positive qui inclut la matière active d'électrode positive selon l'une quelconque des revendications 1 à 4.
